# EUROPEAN PATENT SPECIFICATION

(11) **EP 2 203 726 B1**
(45) Date of publication and mention of the grant of the patent: **29.06.2011**
(21) Application number: 07827760.5
(22) Date of filing: 11.10.2007
(51) Int. Cl.: G01K 7/00, G01K 15/00, G05D 23/19

(54) **FAIL-SAFE TEMPERATURE DETECTION DEVICE**
AUSFALLSICHERE TEMPERATURDETEKTIONSEINRICHTUNG
DISPOSITIF DE DÉTECTION DE TEMPÉRATURE À SÉCURITÉ INTÉGRÉE

(43) Date of publication of application: 07.07.2010
(73) Proprietor: Ansaldo STS S.p.A., Genova (IT)
(72) Inventor: SABINA, Salvatore, I-56127 Pisa (IT); BIANCO CHINTO, Giovanni, I-10093 Collegno (IT)
(74) Representative: Bongiovanni, Simone
(86) International application number: PCT/IT2007/000709
(87) International publication number: WO 2009/047812

(56) References cited:
- EP-A- 0 924 587
- EP-A- 1 411 021
- DE-A1-102004 035 014
- DE-A1-102005 039 439
- US-A1- 2003 034 851
- US-B1- 6 473 708

## Description

### TECHNICAL FIELD

The present invention refers to a fail-safe temperature detection device.

### BACKGROUND ART

In the field of electronic devices, detection of the ambient temperature that surrounds the devices themselves is of particular importance, as the operation of such devices is limited to a specific operating temperature range (for example, from -40 to +85°C in the case of an "industrial" type electronic device). In fact, outside of the operating temperature range, the risk of malfunctioning causing failure, simple malfunctioning or shortening the Mean Time Between Failures (technically known as MTBF) of electronic devices increases significantly.

Depending to the application environment, it is therefore necessary or common to house temperature detection devices inside the containers accommodating working electronic devices that are able to constantly monitor the ambient temperature to check, in real time, if the set limits are exceeded and then apply the necessary event management strategy. By their nature, electronic devices dissipate energy in the form of heat.

Typically, temperature detection devices can use analogue or digital sensors, or thermostats.

Analogue sensors include active or passive components that alter their electrical characteristics according to temperature (for example, the resistivity of PTC or NTC components is modified, or the output voltage or current is altered).

Digital sensors are subdivided by type of interface, precision and resolution.
Lastly, thermostats are components for temperature detection that, in addition to the temperature transducer, internally integrate one or more threshold comparators in order to set one or more temperature thresholds.

However, the above-described temperature detection devices do not allow reliable indications of the measured temperature to be provided in cases of failure, nor allow correct operation of the device to be periodically checked (with short periods of around a few second).

In fact, the temperature detection device could "freeze" at a particular measured temperature level, within the temperature range considered as safe for example, thus providing erroneous temperature readings that could result in incorrect operation of the electronic devices.

In particular, the temperature detection devices cannot detect a failure state.

Furthermore, the temperature detection devices have high response times that are often incompatible with operating conditions in which the monitored electronic device is subject to rapid changes in temperature.

### DISCLOSURE OF INVENTION

The object of the present invention is therefore that of embodying an electronic temperature detection device that resolves the drawbacks of known devices.

According to the present invention, a temperature detection device is embodied, as defined in claim 1.

### BRIEF DESCRIPTION OF THE DRAWINGS

For a better understanding of the invention, some embodiments shall now be described, purely by way of non-limitative example and with reference to the enclosed drawings, where:
- figure 1 shows a block diagram of the structure of the temperature detection device made according to the principles of the present invention,
- figure 2 shows a circuit diagram of the self-diagnosis structure and a diagram of a differential amplifier,
- figure 3 shows a graph of the temperature-time characteristics of two separate sensors,
- figure 4 shows a time diagram of an alarm signal,
- figure 5 shows a finite-state machine representing part of the device, and
- figures 6 and 7 shows the operational flowcharts of the device under different operating conditions.

### BEST MODE FOR CARRYING OUT THE INVENTION

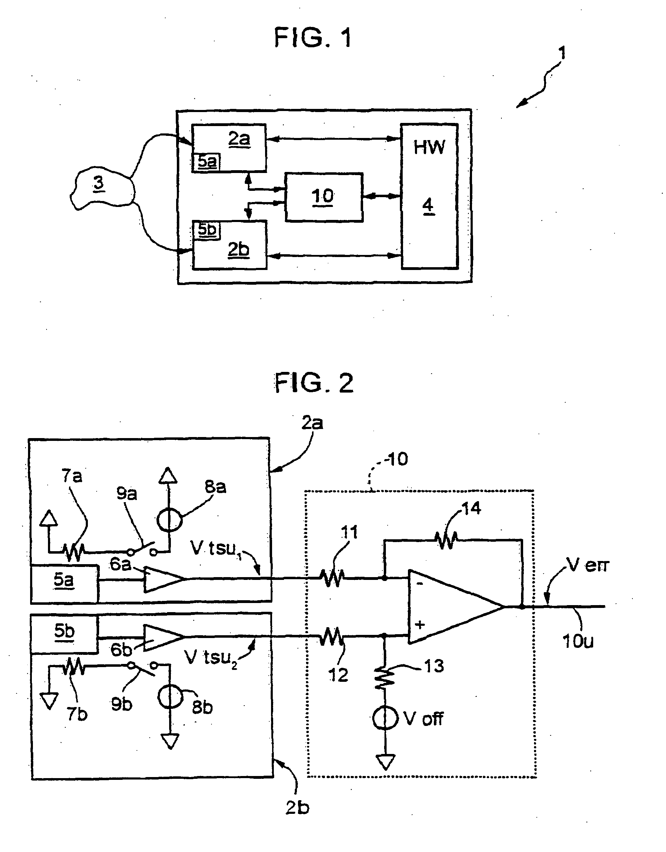

Figure 1 shows a temperature detection device 1 comprising a first and a second independent detection unit 2a and 2b able to measure the temperature of the same environment/same object schematically indicated with reference numeral 3. To this end, the detection units 2a and 2b are equipped with respective sensors 5a and 5b placed near to each other.

The presence of more than one sensor essentially allows any variance in the temperatures measured by the sensors 5a and 5b to be detected, thereby indentifying failure of the temperature detection device 1.

The detection units 2a and 2b exchange data via a hardware interface 4, the operation of which shall be explained further on.

As shown in Figure 2, each of the two detection units 2a and 2b comprises a sensor 5a and 5b able to produce an output signal, in particular a voltage, variable with temperature according to a known law (Figure 2).

Unit 2b differs from unit 2a in that it uses a sensor 5b, the transfer function of which has different characteristics with respect to those of sensor 5a. In particular, the temperature/voltage characteristic of sensor 5b has a different gradient with respect to that of sensor 5a and a different voltage value for the same temperature t=t₀.

The output of each temperature sensor 5a and 5b is connected in input to a respective amplification stage 6a and 6b having a respective gain G1 and G2. The gains G1 and G2 are chosen such that the amplification stages 6a and 6b generate signals Vtsu1 and Vtsu2 in output that are substantially equal for the same measured temperature.

In this way, the combination of the temperature sensors 5a and 5b and amplifiers 6a and 6b present practically the same temperature/voltage characteristic. Any small variations in the temperature/voltage characteristic depend on spurious variations in the manufacturing parameters for the temperature sensors 5a and 5b and the amplifiers 6a and 6b during the production process.

As shown in Figure 2, each detection unit 2a and 2b also comprises its own heating element 7a and 7b that can be connected to/disconnected from an electric current generator 8a and 8b by the switching of a piloted switch 9a and 9b or an equivalent device. The heating element 7a and 7b is placed near to (or in contact with) a respective sensor 5a and 5b.

The piloted switch 9a and 9b is controlled by a pilot signal coming from the hardware interface 4, should a self-diagnosis check of the temperature detection device 1 be activated.

When the piloted switch 9a and 9b is closed, an electric current flows through the heating element 6a and 6b and, due to the Joule effect, causes an artificial increase in the temperature detected by the sensor 5a and 5b involved.

As shown in Figure 2, the two detection units 2a and 2b are connected to a negative-feedback differential amplifier 10, having a first inverting input (-) to which the signal Vtsu1 is fed through a resistor 11. The differential amplifier 10 also has a non-inverting input (+) to which the signal Vtsu2 is fed through a resistor 12.

The non-inverting input (+) of the differential amplifier 10 also receives a reference voltage Voff, user adjustable via a resistor 13. A feedback resistor 14 is also inserted between the inverting input (-) and an output 10u of the differential amplifier 10.

In this way, the differential amplifier 10 compares the measurements originating from the two detection units 2a and 2b (represented by the voltages Vtsu1 and Vtsu2), determining if there is an error or not in the operation of the sensors 5a and 5b .

In particular, the operational amplifier 10 has an output 10u on which there is a voltage Verr proportional to the difference between Vtsu1 and Vtsu2, i.e. between the measurements of the temperatures detected by the sensors 5a and 5b.

The output voltages of the detection units 2 and 3 can be close to each other (Vtsu1 = Vtsu2); in this case, the output voltage Verr of the differential amplifier 9 is at a logical level (for example, a high logical level, close to the reference voltage Voff) corresponding to the correct operation of the sensors (no error).

Vice versa, when the output voltage of the detection units 2a and 2b diverge considerably (Vtsu1 different from Vtsu2 with a difference greater than a configurable threshold), the output voltage Verr of the differential amplifier 10 assumes an opposite value to the previous one, for example, a low logical level.

In this way, the output of the amplifier 10 assumes a binary value in function of the difference between the detected temperatures; in particular, if the sensors 5a and 5b work correctly this value is a high logical level in the example, while in the case of sensor malfunction this logical value is the opposite one, for example, a low logical level.

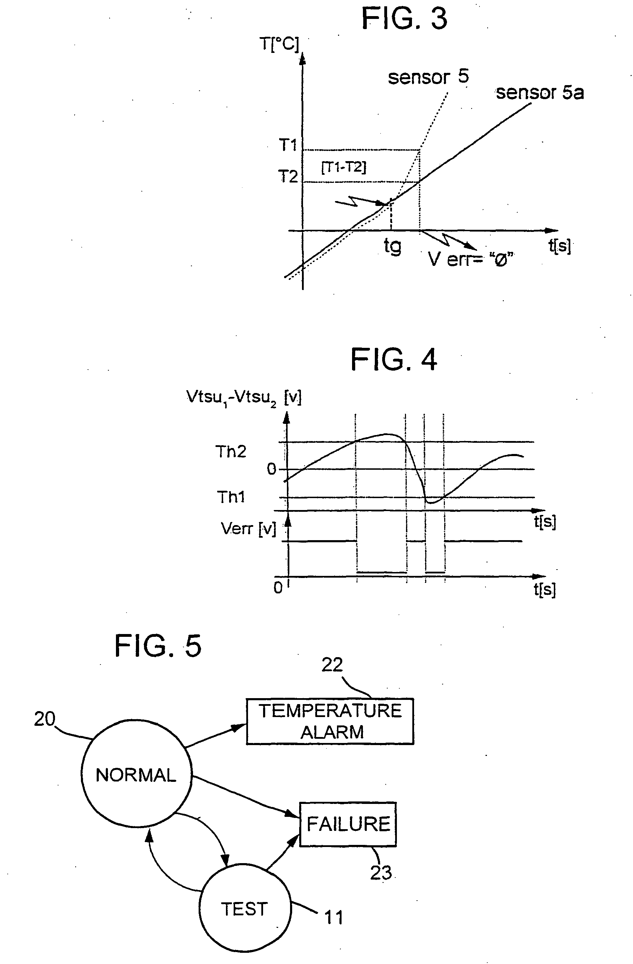

In Figure 3, a graph is shown with a time axis on the abscissa and the ordinate representing the temperatures T1 and T2 measured by the respective sensors 5a and 5b.

In this graph, the instant of variation tg in the transfer function of the sensors due to a malfunction can be noted.

In this graph, the maximum difference between the temperatures T1 and T2 (|T1-T2|) is defined, beyond which the sensors 5a and 5b are recognized as being in a failure state. The size of this difference can be configured with different values.

As the offset voltage Voff increases, there is a corresponding widening of the interval |T1-T2|, as the temperatures are transformed into voltages by the sensors 5a and 5b.

In Figure 4, a graph is shown highlighting an example of the development of the error signal for the sensors Verr as the difference between the temperatures T1 and T2 detected by the sensors 5a and 5b varies.

The magnitude of the thresholds Th1 and Th2 with which the temperature difference signal T2-T1 is compared depends on the value of the offset voltage Voff. These magnitudes can be configured with different values.

If the temperature difference signal T2-T1 is greater or less than one of the two thresholds Th1 and Th2, a failure is detected (in this embodiment, the error signal Verr assumes a low logical level), while if the temperature difference signal T2-T1 is between the two thresholds Th1 and Th2, correct operation of the sensors is detected (in this embodiment, the error signal Verr assumes a high logical level)

The hardware interface 4 also provides for signalling the reaching of a maximum temperature threshold Vtemp, beyond which an alarm signal nTALLARM is activated.

The hardware interface 4 can be considered as a finite-state machine. As shown in Figure 5, there is a normal operating state 20 and a test state 21.

In the normal operating state 20, it is checked that the measured temperature does not exceed the voltage threshold of maximum temperature Vtemp and that there are no failures on the sensors 5a and 5b or the hardware interface 4.

If the measured temperature exceeds the maximum temperature threshold defined by the voltage of maximum temperature Vtemp, then a temperature alarm state 22 is entered; in the case in which failure is detected on either one of the two sensors 5a and 5b or the hardware interface 4, a failure state 23 is entered. Both test state 22 and failure state 23 are communicated to the user via known techniques.

In the test state 21, self-diagnosis of the sensors 5a and 5b is carried out, in order to avoid the risk of detected temperature values becoming frozen.

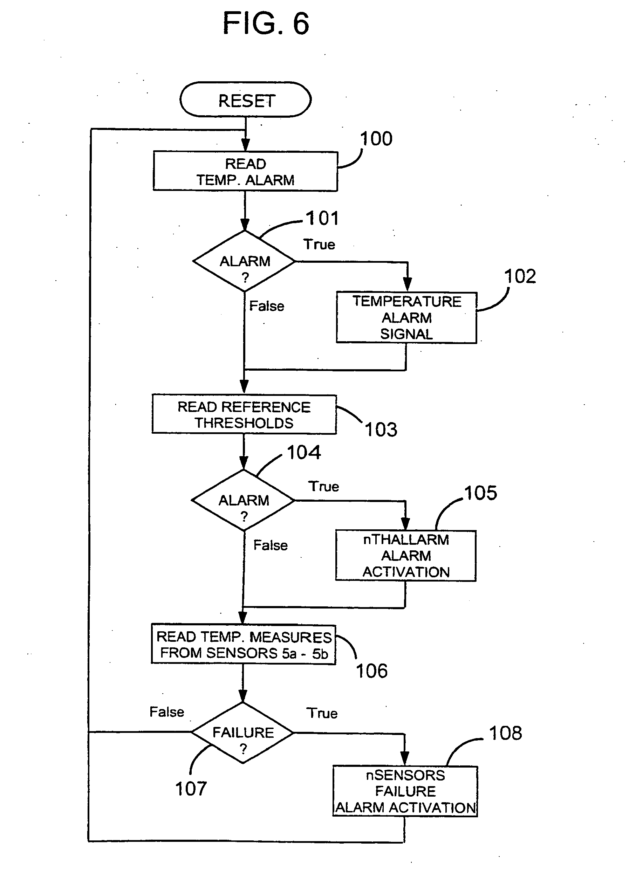

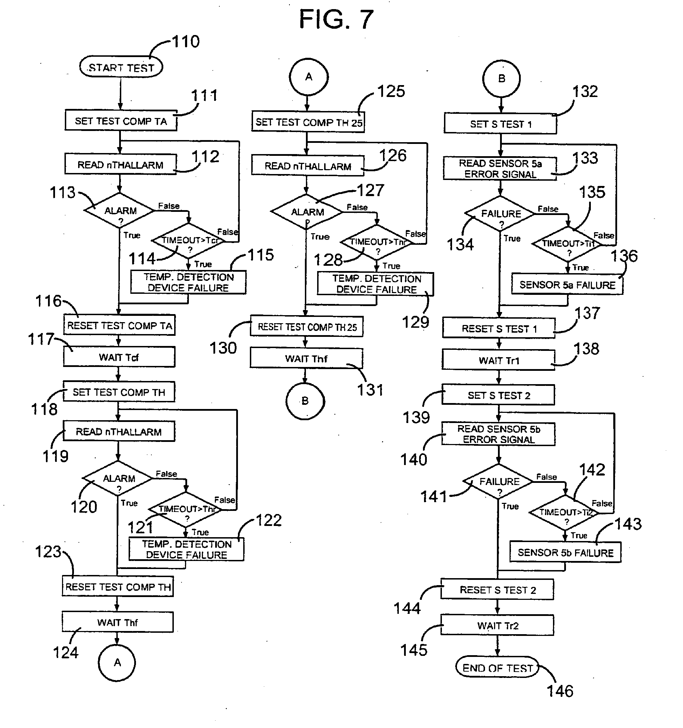

In particular, Figures 6 and 7 show the flowcharts of the operations automatically carried out in the various states of the finite-state machine representing the hardware interface 4.
In particular, the normal operating state 20 (Figure 6) provides an interactive cycle during which the first operation (block 100) reads the temperatures measured by both sensors 5a and 5b via the hardware interface 4.

In the case in which a higher temperature than that defined by the threshold voltage of maximum temperature Vtemp (block 101) is detected through reading the nTALLARM signal, the temperature alarm state 22 is entered (block 102), in which an alarm signal to the user is activated and which could also include the switching off of the electronic devices monitored by the temperature detection device 1 or the starting up, for example, of an active ventilation system or other techniques of handling the detected malfunction.

Independently of whether or not temperatures above that set as the maximum threshold temperature occur, the cycle proceeds with reading the internal reference thresholds, represented by voltage values that must be kept steady for correct working of the electronic circuits present in the temperature detection device 1 (block 103).

If the internal reference thresholds shift significantly with respect to their original position (block 104), the nTHALLARM active-low signal is activated (block 105) to signal that the internal reference thresholds have shifted too much, rendering detection of the voltage threshold of maximum temperature Vtemp too imprecise.

Independently of whether or not shifting of the internal reference thresholds occurs, the cycle proceeds with reading the difference between the temperatures measured by the sensors 5a and 5b (block 106).

If the difference between the temperatures T1 and T2 measured by the sensors 5a and 5b exceeds one of the two thresholds Th2 and Th1 (block 107), the nSENSORS_FAILURE signal is activated (block 108), active-low in this embodiment, through which an alarm is signalled to the user.

The test state 21 (Figure 7) is activated at the end of each cycle of normal operation. Typically, the time spent in the normal operating state is approximately 100 seconds, while the time spent in the test state is typically 20 seconds. These times depend on the application scenario and are not mandatory for the device 1.

The test cycle (block 110) starts with the activation of the TEST COMP TA active-high test flag (block 111) which forces the switching of the nTALLARM signal for exceeding the maximum temperature threshold.

At this point, the nTALLARM alarm signal is read (block 112). If the nTALLARM signal has a low logical level (alarm activated) (block 113), the test continues; if not, the Ter timeout time is checked (block 114). If the Ter timeout time has expired, failure of the temperature detection device 1 is signalled to the user (block 115); if not, reading of the nTALLARM signal is repeated (block 112).

Following the reading of an activated alarm signal nTALLARM (block 112) or following the notification of failure of the temperature detection device 1 to the user (block 115), the TEST COMP TA flag is reset (block 116).

There is then a wait delay for time Tcf (block 117), after which a second flag TEST COMP TH is activated (block 118).

In this phase, activation of the nTHALLARM signal for exceeding the minimum threshold Th1 is forced and the nTHALLARM signal is read (block 119). If the nTHALLARM alarm signal has a high logical level (alarm not activated) (block 120), the timeout time Thr is checked. If the Thr timeout time has expired (block 121), then failure of the temperature detection device 1 is signalled to the user. If not, the read procedure for the nTHALLARM signal is repeated.

If either the user has been notified of failure of the temperature detection device 1 (block 122) or the effective activation of the nTHALLARM signal has occurred (block 120), then the TEST COMP TH flag is deactivated by setting it to a different logical level from the previous one (block 123) and there is a wait delay for time THf.

At this point, the TEST COMP TH25 test flag is activated (block 125). In this phase, activation of the nTHALLARM signal for the maximum temperature threshold Th2 is forced.

The nTHALLARM signal is then read (block 126). If the nTHALLARM alarm signal is at a high logical level (alarm not activated) (block 127), the Thr timeout time is checked. If the Thr timeout time has expired (block 128), then failure of the temperature detection device 1 is signalled to the user (block 129). If not, the read procedure for the nTHALLARM (block 127) signal is repeated.

If either the user has been notified of failure of the temperature detection device 1 (block 129) or the effective activation of the nTHALLARM signal has occurred (block 127), then the TEST COMP TH25 flag is deactivated by setting it to a different logical level from the previous one (block 130) and there is a wait delay for time THf.

At this point, the S TEST 1 test flag is activated (block 132). In this phase, a closure command is activated for the piloted switch 9a associated with detection unit 2a.

Then the alarm signal for sensor 5a is read (block 133). In these conditions, the error signal for sensor 5a should be low due to the different temperatures of the two sensors 5a and 5b. If the sensor error signal has a high logical level (alarm not activated) (block 134), it is checked whether the Ti1 timeout time has expired.

If the error signal for sensor 5a assumes a low logical level before the Ti1 timeout expires (block 135), then it is signalled to the user that the test has been successfully passed, as the two sensors - correctly operating - measure sensibly different temperatures due to the heating applied by heater 7a (block 136) to one of the two sensors.

In not, or rather if no significant difference has been detected between the temperatures measured by the two sensors by the time the Ti1 timeout expires, the read procedure for the sensor error signal is repeated (block 133).

If the user has been notified that the test has been successfully passed (block 136), then the S TEST 1 flag is deactivated by setting it to a different logical level from the previous one (block 137) and there is a wait delay for time Tr1 (block 138).

At this point, the S TEST 2 test flag is activated (block 139). In this phase, a closure command is activated for the piloted switch 9b associated with detection unit 2b.

The alarm signal for sensor 5b is then read (block 140). In these conditions, the error signal for sensor 5b should be low due to the different temperatures of the two sensors 5a and 5b. If the sensor error signal has a high logical level (alarm not activated) (block 141), it is checked whether the Ti2 timeout time has expired.

If the error signal for sensor 5b assumes a low logical level before the Ti2 timeout expires (block 142), then it is signalled to the user that the test has been successfully passed, as the two sensors - correctly operating - measure sensibly different temperatures due to the heating applied by heater 7b (block 143) to one of the two sensors.

In not, or rather if no significant difference has been detected between the temperatures measured by the two sensors by the time the Ti2 timeout expires, the read procedure for the sensor error signal is repeated (block 140).

If the user has been notified that the test has been successfully passed (block 143), then the S TEST 2 flag is deactivated by setting it to a different logical level from the previous one (block 144) and there is a wait delay for time Tr2 (block 145).

At this point, the test state 21 is exited and the system returns to the normal operating state 20.

From the above description, the advantages provided by the temperature detection device 1 are clear. In particular, the above-described temperature detection device allows a variety of dual sensors to be used and is able to diagnose the failure of one of the two temperature sensors of which it is formed.

Furthermore, through an incorporated hardware interface, the above-described temperature detection device allows an automated self-diagnosis procedure to be executed, during which correct functioning is detected regarding the signal for exceeding a critical temperature and exceeding the minimum and maximum temperature thresholds given by the difference in measured temperature of the two sensors that form said temperature detection device.

Through the artificial heating of both sensors at different times, the automated self-diagnosis procedure also allows checking for failure of the temperature sensors themselves, thus guaranteeing the user that the temperature information read from them is true and not the result of malfunctioning of the temperature detection device.

Finally, it is obvious that modifications and variants can be made to the described temperature detection device without leaving the scope of the present invention, as defined in the enclosed claims. In particular, the components of the temperature detection device can change; the structure of the differential amplifier can be modified and the operational amplifier can be substituted by BJT or MOS transistors connected in a manner to form a differential amplifier.

In addition, the number of sensors forming the temperature detection device can vary and be more than two. Lastly, the algorithm of the automated self-diagnosis procedure can be modified by changing the order of the test phases and including further tests.

## Claims

1. Temperature detection device (1), comprising at least a first and a second detection unit (2a and 2b) for detecting the temperature of the same environment/same object (3), each detection unit being equipped with a respective first and second temperature sensor (5a and 5b),
**characterized in that** it comprises temperature changer means (7a and 7b - 9a and 9b - 8a and 8b) able to alter the temperature of said first or said second sensor in a test phase (21), and
fault-detection means (4) able to detect a normal operating state (20) if, following activation of the temperature changer means (7a and 7b - 9a and 9b - 8a and 8b), said first and a second detection units (2a and 2b) detect significantly different temperatures.

2. Device according to claim 1, in which said fault-detection means (4) are able to detect a failure state (23) if, following the activation of the temperature changer means (7a and 7b - 9a and 9b - 8a and 8b), said first and a second detection units (2a and 2b) detect temperatures that are substantially the same.

3. Device according to claim 1 or 2, in which said temperature changer means (7a and 7b - 9a and 9b - 8a and 8b) comprise heating means.

4. Device according to claim 3, in which said heating means comprise a resistive heater element (7a and 7b) coupled to the respective first/second temperature sensor (5a and 5b) and a respective piloted switch (9a and 9b) able to supply, when closed, electric current to the respective resistive heater element (7a and 7b).

5. Temperature detection device according to any of the previous claims, in which said temperature sensors (5a and 5b) have a voltage output, the value of which is correlated to the temperature; the temperature/voltage characteristic of said first sensor (5a) being different with respect to the temperature/voltage characteristic of said second sensor (5a).

6. Device according to claim 5, in which each first and a second detection unit comprises a respective amplification stage (6a and 6b) with the output of the respective sensor (5a and 5b) connected in input,
said amplification stages having respective gains (G1 and G2) with values such that the amplification stages generate substantially similar temperature signals (Vtsu1 and Vts2) in output for the same measured temperature.

7. Temperature detection device according to any of the previous claims, in which said detection units (2a and 2b) generate respective temperature signals Vtsu1 and Vtsu2 in output,
said device comprising comparator means (10) receiving the temperature signals Vtsu1 and Vtsu2 in input and generating a difference signal in output,
said fault-detection means being able to detect said normal operating state if said difference signal has a preset value with respect to at least one threshold (Th1 and Th2).

8. Device according to claim 7, in which said fault-detection means are able to detect said normal operating state if said difference signal has a preset value with respect to a first and a second threshold (Th1 and Th2).

9. Device according to claim 8, in which offset regulator means are provided that are able to modify the relationship existing between the first and the second threshold (Th1 and Th2).

10. Device according to one of claims 7 to 9, in which said comparator means comprise a differential amplifier (10) having first and second inputs receiving the temperature signals Vtsu1 and Vtsu2, the output of said differential amplifier assuming a first logical value corresponding to said normal operating state and a second logical value corresponding to a failure.

11. Device according to claim 10, dependent on claim 9, in which said offset regulator means comprise an adjustable voltage generator operatively connected to an input of said differential amplifier (10).

12. Device according to any of the previous claims, in which said temperature changer means (7a and 7b - 9a and 9b - 8a and 8b) comprise first temperature changer means (132) able to modify the temperature (132) of the first sensor and detect if, after a specific time interval (135), said first and second detection units (2a and 2b) measure sensibly different temperatures (134), in order to recognize normal operation, said temperature changer means also comprising second temperature changer means (139) able to modify the temperature (139) of the second sensor and detect if, after a specific time interval (142), said first and a second detection units (2a and 2b) measure sensibly different temperatures (143), in order to recognize normal operation.

13. Device according to claim 12, in which said second temperature changer means (139) are activated successively to said first temperature changer means.

14. Temperature detection device 1 according to any of the previous claims, in which an alarm indication (102) is generated if the measured temperature of at least one of said detection units (2a and 2b) exceeds a maximum threshold value Vtemp.

15. Device according to claim 14, in which first means of control (111-116) are provided that are able to force a signal expressing the exceeding of said maximum threshold value Vtemp from a first to a second logical value (111) and means able to check the effective switching of said logical signal within a preset time.

16. Device according to claim 8, in which second means of control (118-124 and 125-131) are provided that are able to force a signal expressing the exceeding of said first and said second threshold (Th1 and Th2) from a first to a second logical value (118 and 126) and means (119-122 and 126-129) able to check the effective switching of said logical signal within a preset time.

## Patentansprüche

1. Temperaturerfassungsvorrichtung (1), die folgendes aufweist:
eine erste und eine zweite Erfassungseinheit (2a und 2b) zum Detektieren der Temperatur derselben Umgebung/desselben Objekts (3), wobei jede Erfassungseinheit mit einem ersten bzw. zweiten Temperatursensor (5a und 5b) ausgestattet ist,
**dadurch gekennzeichnet,**
**daß** sie Temperaturänderungseinrichtungen (7a und 7b; 9a und 9b; 8a und 8b), die zum Ändern der Temperatur des ersten oder des zweiten Sensors in einer Testphase (21) in der Lage sind, und Fehlererfassungseinrichtungen (4) aufweist, die zum Erfassen eines normalen Betriebszustands (20) in der Lage sind, wenn nach der Aktivierung der Temperaturänderungseinrichtungen (7a und 7b; 9a und 9b; 8a und 8b) die erste und die zweite Erfassungseinheit (2a und 2b) signifikant unterschiedliche Temperaturen detektieren.

2. Vorrichtung nach Anspruch 1,
wobei die Fehlererfassungseinrichtungen (4) einen Fehlerzustand (23) feststellen können, wenn nach der Aktivierung der Temperaturänderungseinrichtungen (7a und 7b; 9a und 9b; 8a und 8b) die erste und die zweite Erfassungseinheit Temperaturen detektieren, die im wesentlichen gleich sind.

3. Vorrichtung nach Anspruch 1 oder 2,
wobei die Temperaturänderungseinrichtungen (7a und 7b; 9a und 9b; 8a und 8b) Heizeinrichtungen aufweisen.

4. Vorrichtung nach Anspruch 3,
wobei die Heizeinrichtungen ein mit dem jeweiligen ersten/zweiten Temperatursensor (5a und 5b) gekoppeltes Widerstandsheizelement (7a und 7b) sowie einen jeweiligen Pilotschalter (9a und 9b) aufweisen, der im geschlossenen Zustand dem jeweiligen Widerstandsheizelement (7a und 7b) elektrischen Strom zuführen kann.

5. Temperaturerfassungsvorrichtung nach einem der vorhergehenden Ansprüche,
wobei die Temperatursensoren (5a und 5b) ein Spannungsausgangssignal aufweisen, dessen Wert von der Temperatur abhängt;
wobei die Temperatur/Spannungs-Charakteristik des ersten Sensors (5a) von der Temperatur/Spannungs-Charakteristik des zweiten Sensors (5a) verschieden ist.

6. Temperaturerfassungsvorrichtung nach Anspruch 5,
wobei jede erste und zweite Erfassungseinheit eine jeweilige Verstärkungsstufe (6a und 6b) aufweist, wobei der Ausgang des jeweiligen Sensors (5a und 5b) mit dem Eingang von dieser verbunden ist,
wobei die Verstärkungsstufen jeweilige Verstärkungen (G1 und G2) mit derartigen Werten aufweisen, daß die Verstärkungsstufen am Ausgang im wesentlichen ähnliche Temperatursignale (Vtsu1 und Vts2) für die gleiche gemessene Temperatur erzeugen.

7. Temperaturerfassungsvorrichtung nach einem der vorhergehenden Ansprüche, wobei die Erfassungseinheiten (2a und 2b) am Ausgang jeweilige Temperatursignale (Vtsu1 und Vtsu2) erzeugen,
wobei die Vorrichtung Komparatoreinrichtungen (10) aufweist, denen die Temperatursignale (Vtsu1 und Vtsu2) am Eingang zugeführt werden und die am Ausgang ein Differenzsignal erzeugen,
wobei die Fehlererfassungseinrichtungen den normalen Betriebszustand detektieren können, wenn das Differenzsignal einen vorgegebenen Wert in bezug auf mindestens einen Schwellenwert (Th1 und Th2) aufweist.

8. Temperaturerfassungsvorrichtung nach Anspruch 7,
wobei die Fehlererfassungseinrichtungen in der Lage sind, den normalen Betriebszustand zu detektieren, wenn das Differenzsignal einen vorgegebenen Wert in bezug auf einen ersten und einen zweiten Schwellenwert (Th1 und Th2) aufweist.

9. Vorrichtung nach Anspruch 8,
wobei Offset-Reguliereinrichtungen vorgesehen sind, die in der Lage sind, die zwischen dem ersten und dem zweiten Schwellenwert (Th1 und Th2) vorhandene Relation zu modifizieren.

10. Vorrichtung nach einem der Ansprüche 7 bis 9,
wobei die Komparatoreinrichtungen einen Differenzverstärker (10) mit einem ersten und einem zweiten Eingang aufweisen, denen die Temperatursignale (Vtsu1 und Vtsu2) zugeführt werden, wobei der Ausgang des Differenzverstärkers einen ersten Logikwert annimmt, der dem normalen Betriebszustand entspricht, sowie einen zweiten Logikwert annimmt, der einem Fehler entspricht.

11. Vorrichtung nach Anspruch 10 bei dessen Abhängigkeit von Anspruch 9, wobei die Offset-Reguliereinrichtungen einen einstellbaren Spannungsgenerator aufweisen, der mit einem Eingang des Differenzverstärkers (10) betriebsmäßig verbunden ist.

12. Vorrichtung nach einem der vorhergehenden Ansprüche,
wobei die Temperaturänderungseinrichtungen (7a und 7b; 9a und 9b; 8a und 8b) erste Temperaturänderungseinrichtungen (132) aufweisen, die die Temperatur (132) des ersten Sensors modifizieren und detektieren können, ob nach einem bestimmten Zeitintervall (135) die erste und die zweite Erfassungseinheit (2a und 2b) deutlich unterschiedliche Temperaturen (134) messen, um einen normalen Betrieb zu erkennen,
und wobei die Temperaturänderungseinrichtungen ferner zweite Temperaturänderungseinrichtungen (139) aufweisen, die die Temperatur (139) des zweiten Sensors modifizieren und detektieren können, ob nach einem bestimmten Zeitintervall (142) die erste und die zweite Erfassungseinheit (2a und 2b) deutlich unterschiedliche Temperaturen messen, um einen normalen Betrieb zu erkennen.

13. Vorrichtung nach Anspruch 12,
wobei die zweiten Temperaturänderungseinrichtungen (139) im Anschluß an die ersten Temperaturänderungseinrichtungen aktiviert werden.

14. Temperaturerfassungsvorrichtung (1) nach einem der vorhergehenden Ansprüche,
wobei eine Alarmanzeige (102) generiert wird, wenn die gemessene Temperatur von mindestens einer der Erfassungseinheiten (2a und 2b) einen maximalen Schwellenwert (Vtemp) überschreitet.

15. Vorrichtung nach Anspruch 14,
wobei erste Steuereinrichtungen (111-116) vorgesehen sind, die ein Signal erzwingen können, das das Überschreiten des maximalen Schwellenwerts (Vtemp) von einem ersten zu einem zweiten Logikwert zum Ausdruck bringt, sowie Einrichtungen vorgesehen sind, die das effektive Umschalten des Logikwerts innerhalb einer vorgegebenen Zeit prüfen können.

16. Vorrichtung nach Anspruch 8,
wobei zweite Steuereinrichtungen (118-124 und 125-131) vorgesehen sind, die ein Signal erzwingen können, das das Überschreiten des ersten und des zweiten Schwellenwerts (Th1 und Th2) von einem ersten zu einem zweiten Logikwert (118 und 126) zum Ausdruck bringt, sowie Einrichtungen (119-122 und 126-129) vorgesehen sind, die das effektive Umschalten des Logikwerts innerhalb einer vorgegebenen Zeit prüfen können.

## Revendications

1. Dispositif de détection de température (1), comprenant au moins des première et deuxième unités de détection (2a et 2b) pour détecter la température du même environnement/même objet (3), chaque unité de détection étant équipée de premier et deuxième capteurs de température (5a et 5b) respectifs,
**caractérisé en ce qu'**il comprend des moyens de changement de température (7a et 7b - 9a et 9b - 8a et 8b) capables de modifier la température dudit premier capteur ou dudit deuxième capteur dans une phase d'essai (21), et
des moyens de détection de défaut (4) capables de détecter un état de fonctionnement normal (20) si, après activation des moyens de changement de température (7a et 7b - 9a et 9b - 8a et 8b), ladite première et une deuxième unité de détection (2a et 2b) détectent des températures significativement différentes.

2. Dispositif selon la revendication 1, dans lequel lesdits moyens de détection de défaut (4) sont capables de détecter un état de défaillance (23) si, après l'activation des moyens de changement de température (7a et 7b - 9a et 9b - 8a et 8b), ladite première et une deuxième unité de détection (2a et 2b) détectent des températures qui sont sensiblement identiques.

3. Dispositif selon la revendication 1 ou 2, dans lequel lesdits moyens de changement de température (7a et 7b - 9a et 9b - 8a et 8b) comprennent des moyens de chauffage.

4. Dispositif selon la revendication 3, dans lequel lesdits moyens de chauffage comprennent un élément chauffant résistif (7a et 7b) couplé au premier/deuxième capteur de température (5a et 5b) respectif et un interrupteur piloté (9a et 9b) respectif capable de fournir, à l'état fermé, un courant électrique à l'élément chauffant résistif (7a et 7b) respectif.

5. Dispositif de détection de température selon l'une quelconque des revendications précédentes, dans lequel lesdits capteurs de température (5a et 5b) ont une tension de sortie dont la valeur est corrélée à la température ; la caractéristique température/tension dudit premier capteur (5a) étant différente de la caractéristique température/tension dudit deuxième capteur (5a).

6. Dispositif selon la revendication 5, dans lequel chacune des première et deuxième unités de détection comprend un étage d'amplification (6a et 6b) respectif avec la sortie du capteur (5a et 5b) respectif connecté en entrée,
lesdits étages d'amplification ayant des gains (G1 et G2) respectifs avec des valeurs telles que les étages d'amplification génèrent des signaux de température sensiblement similaires (Vtsu1 et Vts2) en sortie pour la même température mesurée.

7. Dispositif de détection de température selon l'une quelconque des revendications précédentes, dans lequel lesdites unités de détection (2a et 2b) génèrent des signaux de température Vtsu1 et Vtsu2 respectifs en sortie,
ledit dispositif comprenant des moyens de comparateur (10) recevant les signaux de température Vtsu1 et Vtsu2 en entrée et générant en sortie un signal de différence,
lesdits moyens de détection de défaut étant capables de détecter ledit état de fonctionnement normal si ledit signal de différence a une valeur prédéfinie par rapport à au moins un seuil (Th1 et Th2).

8. Dispositif selon la revendication 7, dans lequel lesdits moyens de détection de défaut sont capables de détecter ledit état de fonctionnement normal si ledit signal de différence a une valeur prédéfinie par rapport à un premier et un deuxième seuil (Th1 et Th2).

9. Dispositif selon la revendication 8, dans lequel des moyens de régulateur de décalage sont prévus et capables de modifier la relation existant entre le premier et le deuxième seuil (Th1 et Th2).

10. Dispositif selon l'une des revendications 7 à 9, dans lequel lesdits moyens de comparateur comprennent un amplificateur différentiel (10) ayant des première et deuxième entrées recevant les signaux de température Vtsu1 et Vtsu2, la sortie dudit amplificateur différentiel adoptant une première valeur logique correspondant audit état de fonctionnement normal et une deuxième valeur logique correspondant à une défaillance.

11. Dispositif selon la revendication 10, dépendante de la revendication 9, dans lequel lesdits moyens de régulateur de décalage comprennent un générateur de tension réglable connecté fonctionnellement à une entrée dudit amplificateur différentiel (10).

12. Dispositif selon l'une quelconque des revendications précédentes, dans lequel lesdits moyens de changement de température (7a et 7b - 9a et 9b - 8a et 8b) comprennent des premiers moyens de changement de température (132) capables de modifier la température (132) du premier capteur et de détecter si, après un intervalle de temps spécifique (135), lesdites première et deuxième unités de détection (2a et 2b) mesurent des températures sensiblement différentes (134), afin de reconnaître un fonctionnement normal, lesdits moyens de changement de température comprenant également des deuxièmes moyens de changement de température (139) capables de modifier la température (139) du deuxième capteur et de détecter si, après un intervalle de temps spécifique (142), ladite première et une deuxième unité de détection (2a et 2b) mesurent des températures sensiblement différentes (143), afin de reconnaître un fonctionnement normal.

13. Dispositif selon la revendication 12, dans lequel lesdits deuxièmes moyens de changement de température (139) sont activés à la suite desdits premiers moyens de changement de température.

14. Dispositif de détection de changement de température 1 selon l'une quelconque des revendications précédentes, dans lequel une indication d'alarme (102) est générée si la température mesurée d'au moins une desdites unités de détection (2a et 2b) excède une valeur seuil maximale Vtemp.

15. Dispositif selon la revendication 14, dans lequel des premiers moyens de commande (111 à 116) sont prévus et sont capables de forcer un signal exprimant le dépassement de ladite valeur seuil maximale Vtemp d'une première à une deuxième valeur logique (111) et des moyens capables de vérifier la commutation effective dudit signal logique dans un temps prédéfini.

16. Dispositif selon la revendication 8, dans lequel des deuxièmes moyens de commande (118 à 124 et 125 à 131) sont prévus et sont capables de forcer un signal exprimant le dépassement dudit premier et dudit deuxième seuil Th1 et Th2 d'une première à une deuxième valeur logique (118 et 126) et des moyens (119 à 122 et 126 à 129) capables de vérifier la commutation effective dudit signal logique dans un temps prédéfini.
